# EUROPEAN PATENT SPECIFICATION

(11) **EP 1 622 697 B1**
(45) Date of publication and mention of the grant of the patent: **15.10.2014**
(21) Application number: 03816901.7
(22) Date of filing: 17.04.2003
(51) Int. Cl.: B01D 50/00, B01D 45/14

(54) **POWERED AIR CLEANING SYSTEM AND METHOD OF MAKING SAME**
KRAFTBETRIEBENES LUFTREINIGUNGSSYSTEM UND HERSTELLUNGSVERFAHREN DAFÜR
SYSTEME MOTORISE D'EPURATION D'AIR ET PROCEDE DE FABRICATION DE CELUI-CI

(43) Date of publication of application: 08.02.2006
(73) Proprietor: Sy-Klone Company, Inc., Jacksonville, FL 32217-2853 (US)
(72) Inventor: MOREDOCK, James, G., Jacksonville, FL 32225 (US); EHRENBERG, Eric, L., Jacksonville, FL 32257 (US)
(74) Representative: Troesch Scheidegger Werner AG
(86) International application number: PCT/US2003/011788
(87) International publication number: WO 2004/098749

(56) References cited:
- WO-A1-03/033107
- US-A- 4 048 911
- US-A- 5 545 241
- US-B1- 6 319 304

## Description

### TECHNICAL FIELD

The present invention is directed to an improved powered, atmospheric ejective, air cleaning system and a method of making the same for efficiently removing debris from debris laden air to supply clean air to a device with which the system is used. For example, the invention is useful in connection with total air flow applications such as ventilation systems, as a fixed air flow provider for heat exchangers and heating and air conditioning systems, and with devices having a variable air flow demand, particularly internal combustion engines which exert a variable vacuum on their air intake to be supplied with clean air.

### BACKGROUND AND SUMMARY

Air intakes that centrifugally separate heavier-than-air particles from the air to be used in internal combustion engines, ventilation systems, and other apparatus that draw in air laden with debris, are known. The use of in-line filters in air delivery systems to clean the air is also, per se, known. However, air filters are subject to plugging by debris from the air passing through the filter, which eventually increases the restriction to air flow through the filter and decreases the operating performance of an associated device, such as an electronically controlled internal combustion engine being supplied with air through the filter. Frequent filter replacement and shorter service intervals may also be required, which increases the cost of operation. There is a need for an improved air cleaning system and method of making the same which combine centrifugal separation and air filtration in a manner to efficiently remove debris from debris laden air while reducing or avoiding the aforementioned problems.

Within the US 4 048 911 an apparatus operable to separate particulates, as dirt, dust and foreign materials from air and deliver clean air to a operator's compartment of a tractor cab is described. A powered low restriction air cleaner devise is further described within the US 6 319 304. From the US 5 545 241 an air cleaner is known which includes a housing having a first section and a second section. Finally known from the applicant of the present invention a powered air cleaning system and air cleaning method is described within the international Patent Application WO 03/033107.

A powered air cleaning system according to the invention comprises a flow path extending through the system from an air inlet to a clean air outlet. A motor-driven fan is located along the flow path to draw particulate debris laden air into the inlet and rotate it about an axis to form a rotating flow that stratifies the debris laden air with the heaviest particles in the outermost orbits of the rotating flow. An ejector port is provided for ejecting particulate debris laden air from the stratified rotating flow in the system to the environment. An air filter is located within the rotating flow and across the flow path upstream of the clean air outlet for filtering air from the innermost orbits of the stratified rotating flow. According to the invention, the filter is elongated in the direction of the axis about which the debris laden air is rotated. An outer peripheral surface of the filter within the rotating flow is swept by innermost orbits of the stratified rotating flow for minimizing debris buildup on the filter.

The system comprises a plurality of separable components, each defining a portion of the flow path through the system, the components being located remotely, where they are separately mounted, and interconnected by an intermediate pipe assembly. This modular nature of the system, with separable fan housing and air filter housing components, affords flexibility in making the system in devices with limited spaces for the system components.

A method of making a powered air cleaning system of the invention comprises forming a powered air cleaning system as a plurality of components, each defining a respective portion of a flow path through the system from an inlet to an outlet, the components including first and second components, the first component having a motor-driven fan located along the flow path to draw particulate debris laden air into the inlet and rotate it about an axis to form a rotating flow that stratifies the debris laden air with the heaviest particles in the outermost orbits of the rotating flow, and the second component having a separator-ejector chamber in the flow path downstream of the motor-driven fan, an air filter located within the separator-ejector chamber and across the flow path upstream of the outlet for filtering air from the innermost orbits of the stratified rotating flow, and an ejector port for ejecting particulate debris laden air from the stratified rotating flow in the system. The method further comprises separately mounting the first and second components in remote locations in a device requiring a supply of clean air, such as a device having a variable air flow demand, e.g. an internal combustion engine, and interconnecting the flow path through the first and second components with an intermediate pipe assembly which forms a portion of the flow path of the system.

These and other features and advantages of the present invention will become more apparent from the following description when taken in connection with the accompanying drawings.

### BRIEF DESCRIPTION OF THE DRAWINGS

Fig. 1 is a perspective view from the front, inlet end, and to one side, of a powered air cleaning system/apparatus.
Fig. 2 is a perspective view from the back, outlet end, and to one side, of the air cleaning system of Fig. 1, shown, schematically, connected to an air intake of a device with a variable air flow demand.
Fig. 3 is a view of the system similar to Fig. 1 with portions of the housing cut away to show components within the housing.
Fig. 4 is a view of the system similar to Fig. 2 with portions of the housing cut away to depict components inside the housing.
Fig. 5 is a view of the system like Fig. 1 except with a portion of the housing removed and with the filter in the system removed to show the clean air outlet orifice through the back, outlet end of the housing.
Fig. 6 is a perspective view of the system like Fig. 1 but with the detachable motorized fan housing and filter housing forming the system housing being separated from one another.
Fig. 7 is a detailed view of a portion of the joined detachable motorized fan housing and filter housing having a removable joining clip thereof as shown in Fig. 5.
Fig. 8 is a perspective view from the front, inlet end, and to one side, of the detachable motorized fan housing of the system of Fig. 1.
Fig. 9 is a perspective view from the back, outlet end of the detachable motorized fan housing system of Fig. 1.
Fig. 10 is a perspective view of a main primary air filer element used in the system of Fig. 1.
Fig. 11 is a perspective view of a secondary safety air filter element optionally used in the system of Fig. 1 inside of the main primary air filter element.
Fig. 12 is a perspective view of the filter housing from the front end with no filter installed therein.
Fig. 13 is a perspective view of the filter housing from the back, outlet end thereof with no filter installed.
Fig. 14 is a perspective view of the filter housing like Fig. 12 but with the optional safety filter installed.
Fig. 15 is a perspective view of the filter housing like Fig. 13 but with the main filter shown installed therein.
Fig. 16 is a perspective view from the back, outlet end, and to one side, of the air cleaning system/apparatus wherein the filter housing has a solid rear panel about the clean air outlet and an outer cylindrical wall, with a long ejection slot the length of the air filter.
Fig. 17 is a schematic, cross-sectional view taken at a right angle to the axis A-A of any of the disclosed embodiments, not according to the invention showing the provision of a debris strake connected to the air filter and extending the length of the filter to help channel the debris in the rotating flow of debris laden air away from the filter to the outer wall of the filter housing.
Fig. 18 is a perspective view from one side of an example embodiment of the air cleaning system/apparatus of the invention wherein the air filter housing and the motor-driven fan housing are separately mounted remote from one another in a device to be supplied with air from the system, the two housings being connected by an intermediate pipe assembly of the system.
Fig. 19 is a schematic, perspective view of the system of Fig. 18 showing a compression assembly located in the filter housing upstream of the air filter to ensure stratification of the debris laden air at the filter housing, the axis of the flow path between the fan housing and the filter housing being shown in dashed lines without illustration of the intermediate pipe assembly.

### BEST MODE FOR CARRYING OUT THE INVENTION

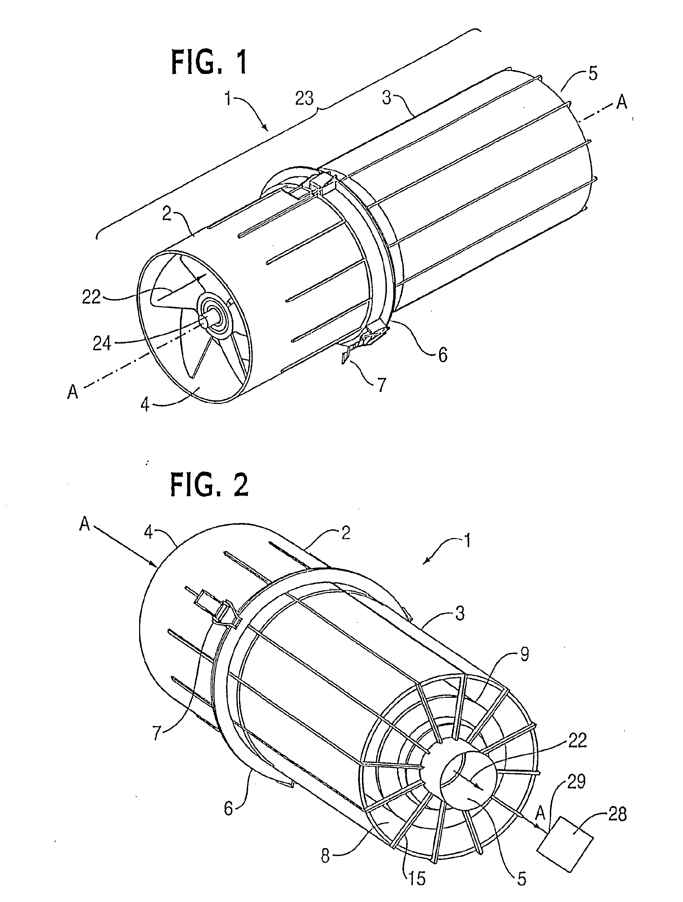

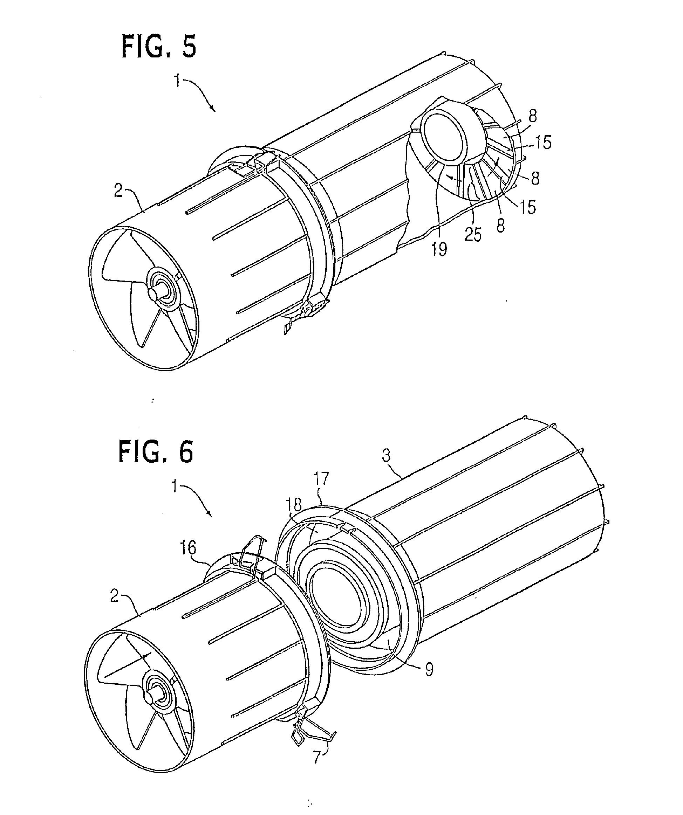

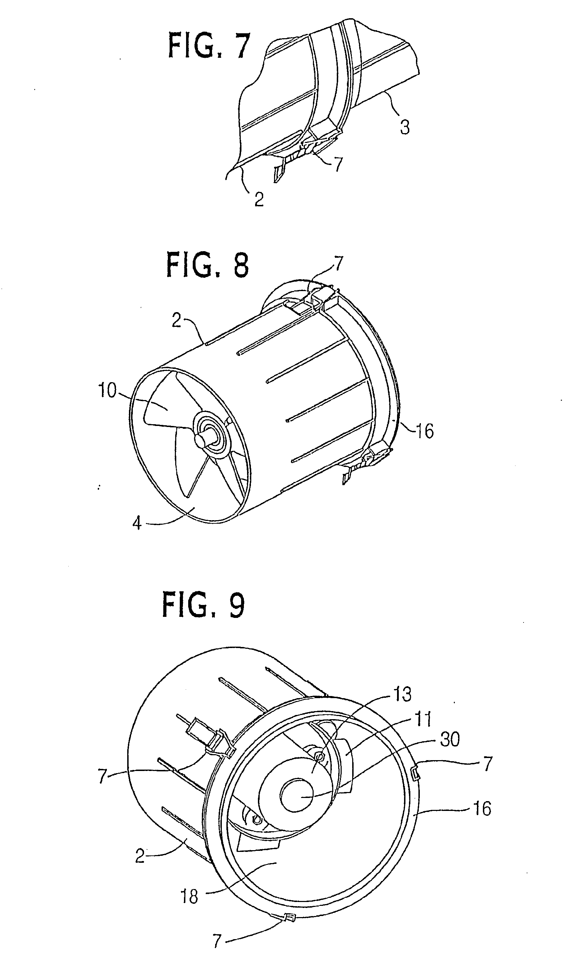

Referring now to the drawings, a powered air cleaning system or apparatus 1, Figs. 1-6, according to a first example embodiment not according to the invention is shown connected to the air intake 29 of a device 28, such as an internal combustion engine or other device requiring a supply of clean air, as shown schematically in Fig. 2. The system comprises a flow path 22 extending through the system from an air inlet 4 to a clean air outlet 5 which supplies clean air to the air intake 29 of device 28. The flow path is located within a generally cylindrical housing 23 of the system. Housing 23 is formed by two detachable components - motorized fan housing 2 and filter housing 3 which are detachably connected to one another at a service flange assembly 6 by joining clips 7, see Fig. 7. For this purpose each of the housings 2 and 3 has a joining flange, 16 and 17, respectively. The housings 2 and 3 are shown detached from one another in Fig. 6 and shown separately in Figs. 8 and 9, and 12 and 13, respectively.

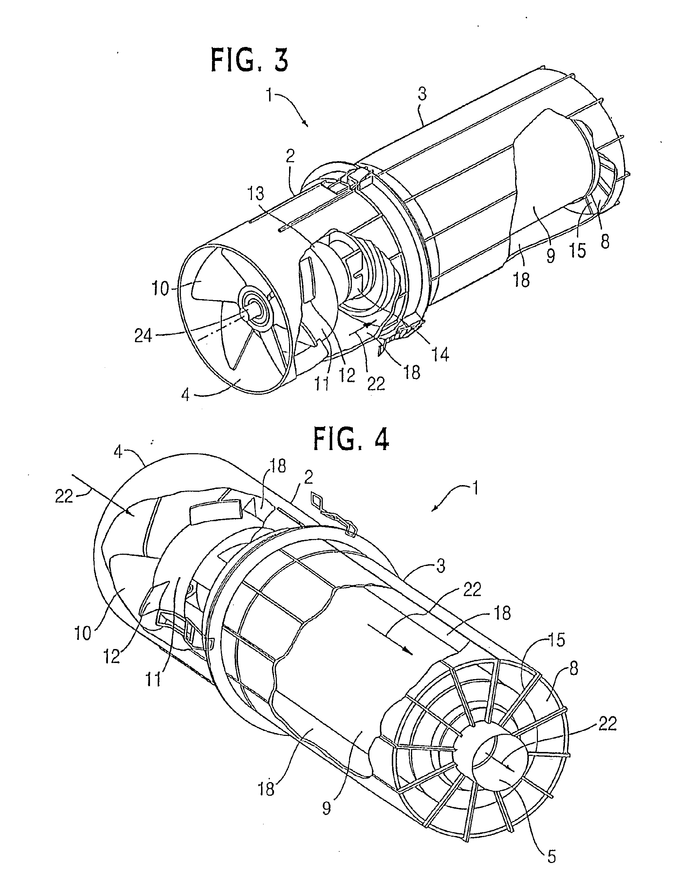

A motor-driven fan 24, comprising a fan blade 10 mounted on the output shaft of an electric motor 13, is located along the flow path 22 to draw particulate debris laden air into the inlet 4 and rotate it about an axis A-A to form a rotating flow in the system that stratifies the debris laden air with the heaviest particles in the outermost orbits of the rotating flow. A compression assembly 11 in the form of an angled louver/motor mount assembly with fixed louvers or vanes 12 is located within the fan housing 2 downstream of the fan blade 10. The compression assembly compresses the volume of the rotating flow of debris laden air drawn into the system inlet to increase the air velocity and centrifugal force acting on the airborne articles. The motor-driven fan 24 is supported at motor 13 thereof within the fan housing by way of the angle louver/motor mount assembly 11 as seen in Figs. 3, 4, 8 and 9.

A separator-ejector chamber 18 is provided in the flow path of the air cleaning system downstream of the angled louver/motor mount assembly, Figs. 3-6, 9 and 15. The outermost orbits of the rotating flow pattern of debris laden air ride on the outer wall 27 of the separator-ejector chamber until reaching an annular ejector port 25 formed about the outlet 5 in the outlet end of the housing radially outward of the clean air outlet. The ejector port is formed by a series of circumferential radial ejection slots 8 separated by strakes 15. The ejector port ejects particulate debris laden air from the stratified rotating flow in the system to the environment.

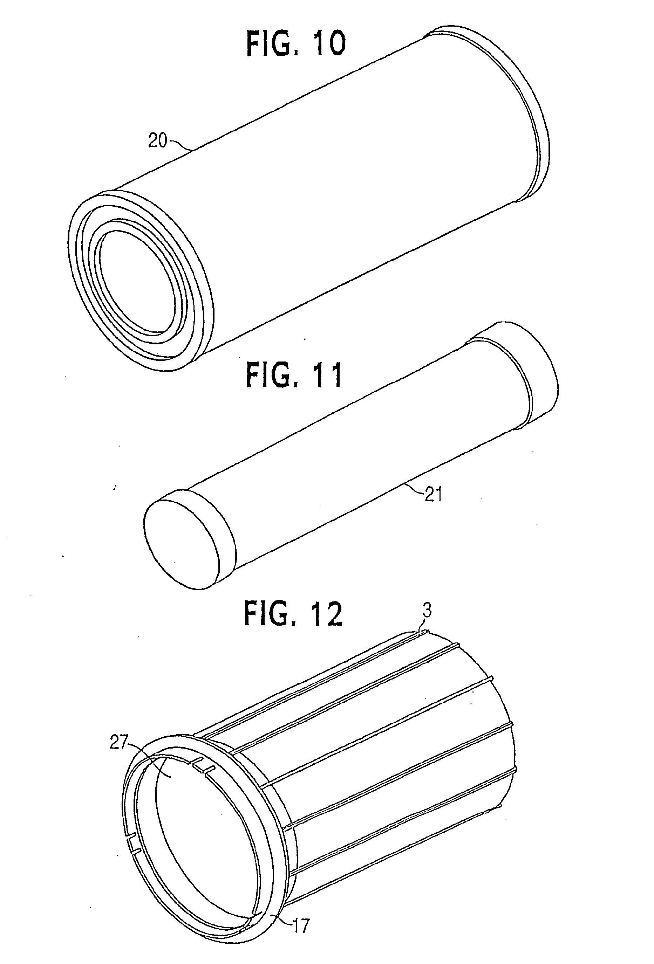

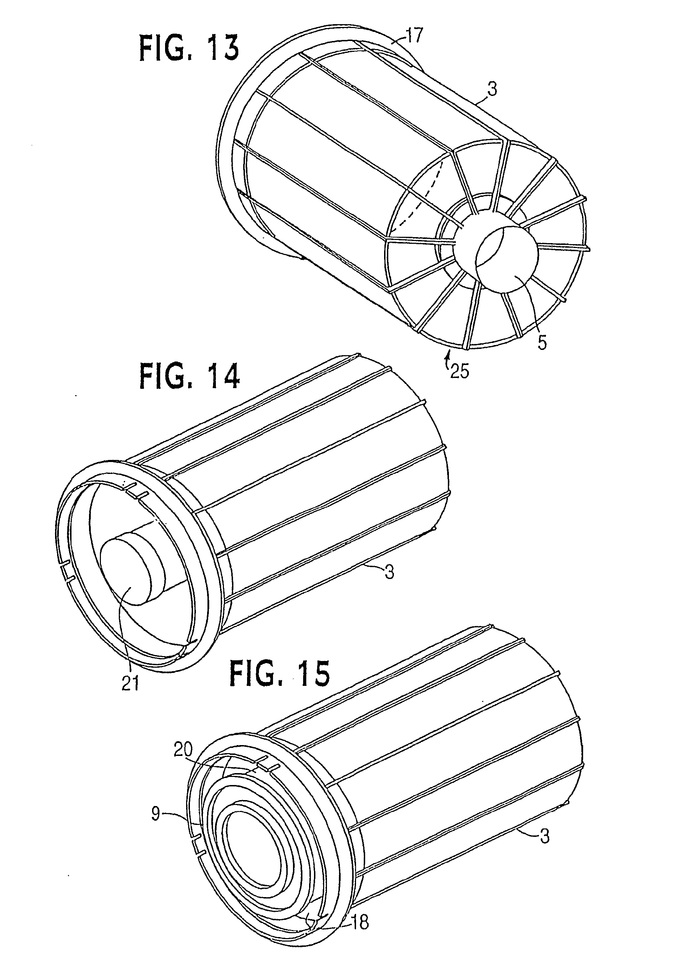

An air filter 9, Figs. 2-4, 6 and 15, in the form of a filter package of at least a main primary air filter element 20, Figs. 10 and 15, and optionally a secondary safety air filter element 21, Figs. 11 and 14, located within the filter element 20, is located within the rotating flow and across the flow path upstream of the outlet for filtering air from the innermost orbits of the stratified rotating flow in the system as the air flows to the clean air outlet 5. The filter 9 is elongated in the direction of and extends along the central longitudinal axis A-A of the generally cylindrical housing 23 in the separator-ejector chamber from the outlet end, where it is mounted on clean air outlet orifice 19, Fig. 5. The upstream end of the filter 9 is supported by a filter compression bracket 14 connected to a support flange 30, Fig. 9, on the end of motor 13.

Debris buildup on the outer surface of the filter 9 is minimized by locating the filter within the rotating flow of the debris laden air in the separator-ejector chamber 18 and by returning particulate debris laden air from the stratified rotating flow in chamber 18 unrestricted through the ejector port 25 at the end of the chamber, e.g., without disrupting the stratified rotating flow in the chamber. The self cleaning action on the filter 9 has also been found to be enhanced, in supplying air to the air intake 29 of a device 28 having a cyclic air flow demand, such as an internal combustion engine which applies a variable vacuum to the outlet 5 of the system, by operating the motor-driven fan to maintain positive air flow pressure on the outer surface of the filter and to return debris laden air to the environment from the system at all rates of air flow demanded by the device. The air cleaning system 1 is designed to generate a much larger air flow than the engine or apparatus 28 upon which it is installed requires, thereby providing a consistent positive air flow pressure to the filter keeping debris buildup on the air filter to a minimum and providing a powerful air flow out of the 360° ejection port 25 formed by the series of radial ejection slots 8 located at the end of the separator-ejector chamber.

The air cleaning system and method of making the same make it possible to maintain low air filter restriction throughout normal service intervals for internal combustion engines and other apparatus by significantly extending air filter life over current service intervals. While the air cleaning system and method of making the same have been described specifically for use in supplying clean air to an internal combustion engine it is not limited to such a use but has wide application for a variety of devices requiring a supply of clean air including ventilation systems, heat exchangers, air compressors, and heating and air conditioning systems.

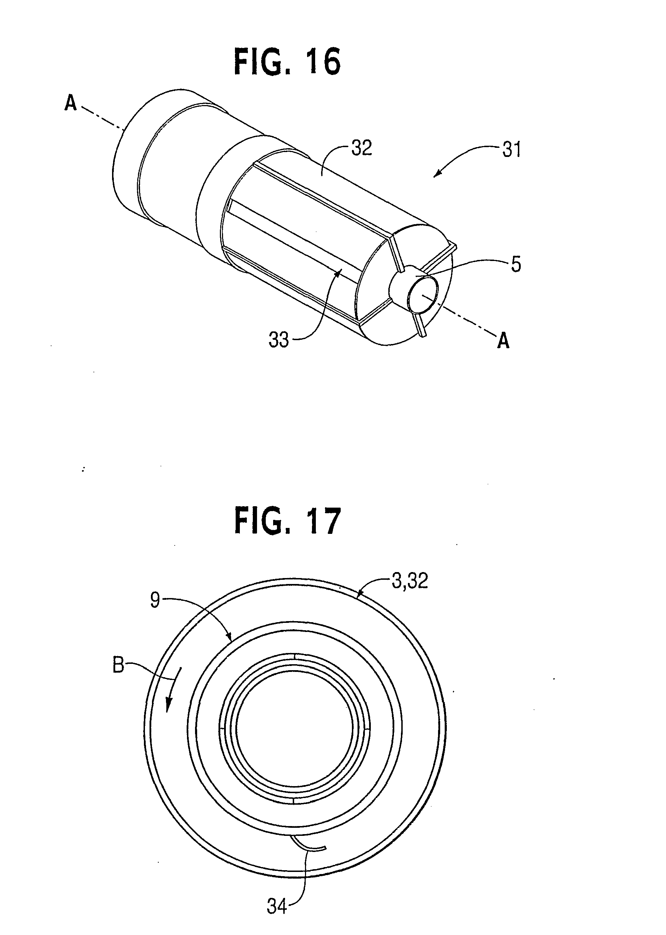

A second example embodiment not according to the invention of the powered air cleaning system or apparatus 31 shown in Fig. 16 is like the system or apparatus 1 of the first example embodiment not according to the invention except for the filter housing, 32 in Fig. 16. That is, instead of providing the ejector port in the outlet end of the filter housing radially outward of the clean air outlet as in the first example embodiment, in the filter housing 32 the ejector port 33 is located radially outward of the outermost orbits of the rotating flow opposite the air filter. In particular, the ejector port 33 is in the form of a slot in the outer wall of the separator-ejector chamber of the filter housing, the slot extending the length of the air filter. The outlet end of the housing 32 has a solid panel, e.g. is closed, about the clean air outlet 5.

Thus, instead of the debris being allowed to stay in its stratified state for the length of the housing until it is ejected at the rear of the system or apparatus as in the first example embodiment, in the system or apparatus 31 with filter housing 32, as the debris hits the outer orbits of the separation pattern, it is immediately ejected from the rotating flow and the system or apparatus through the ejector slot 33. This feature facilities directing the debris away from the system or apparatus and channeling the debris away from the device, such as an internal combustion engine, on which the system or apparatus is installed. The air filter within the filter housing 32 can also advantageously be subjected to the slight positive pressure during use, reducing restriction to the engine or other device on which the system or apparatus is installed.

Another feature of the invention shown in Fig. 17 can be used with each of the example embodiments. This involves the provision of a debris strake 34 on the outer periphery of the air filter 9. The strake 34 extends longitudinally the length of the air filter and extends outwardly from the outer periphery of the filter in a direction of the rotating flow, shown by arrow B in Fig. 17, for channeling debris in the rotating flow adjacent the air filter away from the filter to the outermost orbits of the rotating flow for ejection from the system.

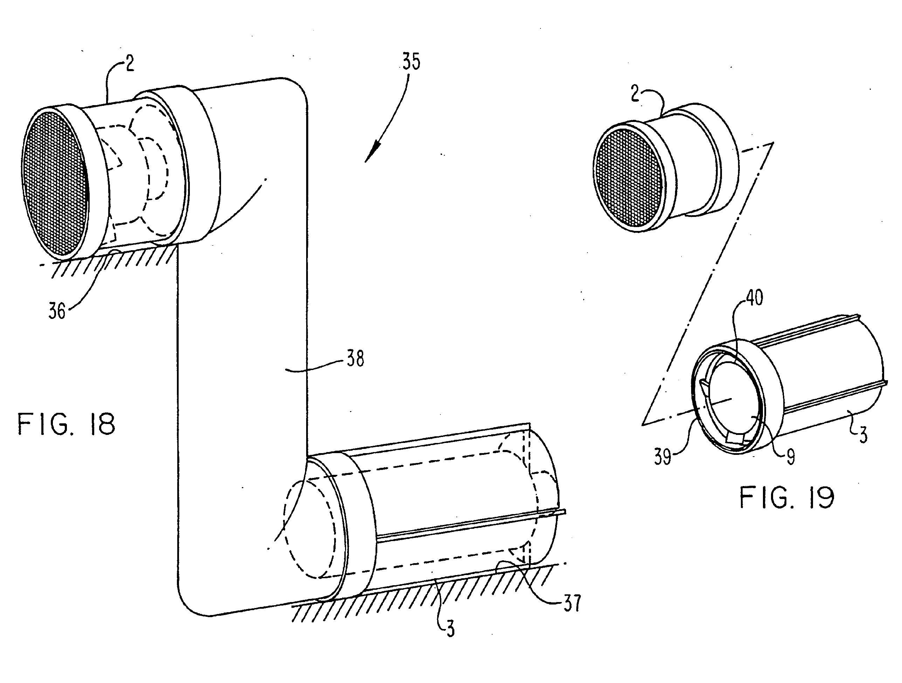

The example embodiment of the powered air cleaning system or apparatus 35 of the invention shown in Fig. 18 is like the system or apparatus 1 of the first example embodiment not according to the invention or the system or apparatus 31 of the second example embodiment not according to the invention except that the detachable components, motorized fan housing 2 and filter housing 3/32 (identified only as 3 in Figs. 18 and 19) are separately mounted at remote locations 36 and 37, respectively, of the device requiring a supply of clean air. An additional pipe assembly 38 is used to connected the separated housings. The housings 2 and 3/32 are each detachable from respective ends of the pipe assembly to facilitate installation, assembly and disassembly for repair or replacement of the system and its component parts.

An optional feature of the system 35 shown in Fig. 19 is the provision of a remote compression assembly in the form of a louvered collar 39 having a plurality of stationary vanes 40 in the flow path to direct the debris-laden air into proper rotating flow. That is, the compression assembly compresses the volume of the rotating flow of debris laden air to increase the air velocity and certrifugal force acting on the airborne particles. In the example embodiment, louvered collar 39 is located in the filter housing 3/32 upstream of the air filter 9 and supports the upstream end of the air filter in lieu of the filter compression bracket, 14 in the first embodiment not according to the invention. The same or an additional louvered collar 39 with vanes 40 can also be attached to the back or downstream side of the fan housing 2 to ensure proper rotating flow in the system 35. Because of the plurality of separable components, each of which is separately mountable to the device, the system is modular, permitting flexibility in adapting the system to complex devices requiring a supply of clean air.

While we have shown and described only three embodiments the third one in accordance with the present invention, it is understood that the same is not limited thereto, but is susceptible to numerous changes and modifications as known to the skilled in the art. For example, the powered air cleaning systems of the invention can be used without the air filter 9 to supply air to a device where centrifugal separation of debris from debris laden air and withdrawal of air from the innermost orbits of the rotating flow in the system by a vacuum from the device at the outlet of the system provides satisfactory cleaning. In this regard, it is noted that the positive pressure in the device maintains flow through the ejector port of the system while the pressure at the clean air outlet remains essentially neutral, with or without air filter 9. The device draws clean air from the clean air outlet in accordance with its demand, e.g., vacuum pull applied to the clean air outlet of the system. Therefore, we do not wish to be limited to the details shown and described herein, but instead to cover all such changes and modifications as are encompassed by the scope of the appended claims.

## Claims

1. A modular, powered air cleaning system (35) of a device requiring a supply of clean air comprising:
a flow path (22) extending through the system from an inlet (4) to an outlet (5);
a fan housing (2) separately mounted at a first location of the device and containing a motor-driven fan (24) located along and forming part of the flow path to draw particulate debris laden air into the inlet and rotate it about an axis (A-A) to form a rotating flow that stratifies the debris laden air with the heaviest particles in the outermost orbits of the rotating flow;
an ejector port (33) for ejecting particulate debris laden air from the stratified rotating flow in the system;
a filter housing (3) containing a separator-ejector chamber (18) separately mounted at a second location of the device remote from the first location and containing an air filter (9) located along and forming part of the flow path with the air filter being located within the separator-ejector chamber and within the rotating flow and across the flow path upstream of the outlet for filtering air from the innermost orbits of the stratified rotating flow, the air filter being elongated in the direction of said axis so that the rotating flow about the filter causes a self cleaning action on the filter;
an intermediate pipe assembly (38) forming a portion of the flow path between and separately mounted at the remote first and second locations at respective ends of the pipe assembly to the fan housing and the filter housing.

2. The air cleaning system according to claim 1, further comprising a compression assembly (39, 40) located along the flow path between the intermediate pipe assembly and the air filter for compressing the volume of the rotating flow of debris laden air to increase the air velocity and centrifugal force acting on the airborne particles.

3. The air cleaning system according to claim 2, wherein the compression assembly provides support for an upstream end of the air filter in the flow path of the system.

4. The air cleaning system according to claim 2, wherein the compression assembly includes a plurality of stationary vanes (40) in the flow path.

5. The air cleaning system according to claim 1, wherein the fan housing is detachably connected to an upstream end of the pipe assembly.

6. The air cleaning system according to claim 1, wherein the filter housing is detachably connected to a downstream end of the pipe assembly.

7. The air cleaning system according to claim 1, wherein both the fan housing and the filter housing are detachably connected to the pipe assembly.

8. The air cleaning system according to claim 1, further comprising a compression assembly (39, 40) located In the filter housing upstream of the air filter.

9. The air cleaning system according to claim 1, further comprising a compression assembly (11) located in the fan housing for compressing the volume of the rotating flow of debris laden air to increase the air velocity and centrifugal force acting on the airborne particles.

10. The air cleaning according to claim 9, wherein the compression assembly provides support for the motor-driven fan.

11. The air cleaning system according to claim 9, wherein the compression assembly includes a plurality of stationary vanes (12) in the flow path.

12. The air cleaning system according to claim 1, further comprising a separator-ejector chamber (18) in the filter housing , the outermost orbits of the rotating flow riding on an outer wall of the separator-ejector chamber to the ejector port.

13. The air cleaning system according to claim 12, wherein the filter is located centrally within the separator-chamber.

14. The air cleaning system according to claim 1, wherein an outer peripheral surface of the elongated filter is cylindrical.

15. A method of making a powered air cleaning system (35) of a device requiring a supply of clean air comprising:
forming a modular, powered air cleaning system (35) as a plurality of components (2, 3, 38), each separately mounted to the device and defining a respective portion of a flow path (22) through the system from an inlet (4) to an outlet (5), the forming including
separately mounting at a first location of the device a fan housing (2) containing a motor-driven fan (24) located along and forming part of the flow path to draw particulate debris laden air into the inlet and rotate it about an axis (A-A) to form a rotating flow that stratifies the debris laden air with the heaviest particles in the outermost orbits of the rotating flow,
separately mounting at a second location of the device remote from the first location a filter housing (3) containing a separator-ejector chamber (18) and forming part of the flow path downstream of the motor-driven fan, an air filter (9) being located within the separator-ejector chamber across the flow path upstream of the outlet for filtering air from the innermost orbits of the stratified rotating flow, the air filter being elongated in the direction of said axis so that the rotating flow about the filter causes a self cleaning action on the filter, and an ejector port (33) being provided for ejecting particulate debris laden air from the stratified rotating flow in the system, and
detectably connecting the fan housing at the first location and the filter housing at the second location to respective ends of an intermediate pipe assembly (38) forming part of the flow path between the fan housing and the filter housing.

16. The method according to claim 15, including providing a compression assembly (39, 40) in the filter housing upstream of the air filter for compressing the volume of the rotating flow of debris laden air to increase the air velocity and centrifugal force acting on the airborne particles.

## Patentansprüche

1. Modulares, angetriebenes Luftreinigungssystem (35) einer Vorrichtung, welche eine Versorgung von Reinluft erfordert, umfassend:
- einen Strömungspfad (22), welcher sich durch das System von einem Einlass (4) zu einem Auslass (5) erstreckt;
- ein Lüftergehäuse (2), welches separat an einer ersten Stelle der Vorrichtung eingerichtet ist und einen motorbetriebenen Lüfter (24) umfasst, welcher entlang des Strömungspfades angeordnet ist und einen Abschnitt davon ausbildet, um eine mit teilchenförmigen Fremdkörpern beladene Luft in den Einlass anzusaugen und sie um eine Achse (A-A) zu rotieren, um eine rotierende Strömung auszubilden, welche die mit Fremdkörpern beladene Luft schichtet, wobei die schwersten Teilchen in den äussersten Umlaufbahnen der rotierenden Strömung vorliegen;
- eine Ausstossmündung (33) zum Ausstossen der mit teilchenförmigen Fremdkörpern beladenen Luft aus der geschichteten, rotierenden Strömung in dem System;
- ein Filtergehäuse (3), welches eine Abscheider-Ausstoss-Kammer (18) umfasst, welche separat an einer zweiten Stelle von der Vorrichtung, welche von der ersten Stelle entfernt ist, eingerichtet ist und einen Luftfilter (9) umfasst, welcher entlang des Strömungspfades angeordnet ist und einen Abschnitt davon ausbildet, wobei der Luftfilter innerhalb der Abscheider-Ausstoss-Kammer und innerhalb der rotierenden Strömung und über den Strömungspfad hinweg stromaufwärts des Auslasses angeordnet ist, zum Filtern von Luft aus den innersten Umlaufbahnen der geschichteten, rotierenden Strömung, wobei der Luftfilter in Richtung der Achse derart erstreckt ist, dass die rotierende Strömung um den Filter eine Selbstreinigungswirkung des Filters bewirkt;
- eine zwischengeordnete Röhrenanordnung (38), welche einen Abschnitt des Strömungspfades zwischen der entfernten ersten und zweiten Stelle an jeweiligen Enden der Röhrenanordnung ausbildet und separat am Lüftergehäuse und Filtergehäuse eingerichtet ist.

2. Luftreinigungssystem nach Anspruch 1, ferner umfassend eine Verdichtungsanordnung (39, 40), welche entlang des Strömungspfades zwischen der zwischengeordneten Röhrenanordnung und dem Luftfilter angeordnet ist, zum Verdichten des Volumens der rotierenden Strömung von der mit Fremdkörpern beladenen Luft, um die Luftgeschwindigkeit und die Zentrifugalkraft, welche auf die durch die Luft beförderten Teilchen wirkt, zu vergrössern.

3. Luftreinigungssystem nach Anspruch 2, bei welchem die Verdichtungsanordnung eine Lagerung für ein stromaufwärts gerichtetes Ende des Luftfilters im Strömungspfad von dem System bereitstellt.

4. Luftreinigungssystem nach Anspruch 2, bei welchem die Verdichtungsanordnung eine Vielzahl von stationären Schaufeln (40) im Strömungspfad umfasst.

5. Luftreinigungssystem nach Anspruch 1, bei welchem das Lüftergehäuse entnehmbar an einem stromaufwärts gerichteten Ende von der Röhrenanordnung angebracht ist.

6. Luftreinigungssystem nach Anspruch 1, bei welchem das Filtergehäuse entnehmbar an einem stromabwärts gerichteten Ende von der Röhrenanordnung angebracht ist.

7. Luftreinigungssystem nach Anspruch 1, bei welchem sowohl das Lüftergehäuse als auch das Filtergehäuse entnehmbar mit der Röhrenanordnung verbunden sind.

8. Luftreinigungssystem nach Anspruch 1, ferner umfassend eine Verdichtungsanordnung (39, 40), welche stromaufwärts des Luftfilters im Filtergehäuse angeordnet ist.

9. Luftreinigungssystem nach Anspruch 1, ferner umfassend eine Verdichtungsanordnung (11), welche in dem Lüftergehäuse angeordnet ist, zum Verdichten des Volumens der rotierenden Strömung von der mit Fremdkörpern beladenen Luft, um die Luftgeschwindigkeit und die Zentrifugalkraft, welche auf die durch die Luft beförderten Teilchen wirkt, zu vergrössern.

10. Luftreinigungssystem nach Anspruch 9, bei welchem die Verdichtungsanordnung eine Lagerung für den motorbetriebenen Lüfter bereitstellt.

11. Luftreinigungssystem nach Anspruch 9, bei welchem die Verdichtungsanordnung eine Mehrzahl von stationären Schaufeln (12) im Strömungspfad umfasst.

12. Luftreinigungssystem nach Anspruch 1, ferner umfassend eine Abscheider-Ausstosser-Kammer (18) im Filtergehäuse, wobei die äussersten Umlaufbahnen der rotierenden Strömung entlang einer Aussenwand der Abscheider-Ausstosser-Kammer zur Ausstossmündung verlaufen.

13. Luftreinigungssystem nach Anspruch 12, bei welchem der Filter innerhalb der Abscheider-Kammer mittig angeordnet ist.

14. Luftreinigungssystem nach Anspruch 1, bei welchem eine Aussenumfangsfläche des langgestreckten Filters zylindrisch ist.

15. Verfahren zum Herstellen eines angetriebenen Luftreinigungssystems (35) einer Vorrichtung, welche eine Zufuhr von Reinluft erfordert, umfassend:
- Ausbilden von einem modularen, angetriebenen Luftreinigungssystem (35) aus einer Mehrzahl von Bauteilen (2, 3, 38), wobei jedes separat an der Vorrichtung eingerichtet ist und einen jeweiligen Abschnitt eines Strömungspfades (22) durch das System von einem Einlass (4) zu einem Auslass (5) bestimmt, wobei das Ausbilden umfasst:
- separates Einrichten eines Lüftergehäuses (2) an einer ersten Stelle der Vorrichtung, welches einen motorbetriebenen Lüfter (24) umfasst, welcher entlang des Strömungspfades angeordnet ist und einen Abschnitt davon ausbildet, um eine mit teilchenförmigen Fremdkörpern beladene Luft in den Einlass anzusaugen und sie um eine Achse (A-A) zu rotieren, um eine rotierende Strömung auszubilden, welche die mit Fremdkörpern beladene Luft schichtet, wobei die schwersten Teilchen in den äussersten Umlaufbahnen der rotierenden Strömung vorliegen,
- separates Einrichten eines Filtergehäuses (3) an einer zweiten Stelle der Vorrichtung, welche von der ersten Stelle entfernt ist, welches eine Abscheider-Ausstosser-Kammer (18) umfasst und einen Abschnitt des Strömungspfades stromabwärts von dem motorbetriebenen Lüfter ausbildet, wobei ein Luftfilter (9) innerhalb der Abscheider-Ausstosser-Kammer über den Strömungspfad hinweg stromaufwärts von dem Auslass angeordnet ist, zum Filtern von Luft von den innersten Umlaufbahnen der geschichteten, rotierenden Strömung, wobei der Luftfilter in der Richtung der Achse erstreckt ist, so dass die rotierende Strömung um den Filter eine Selbstreinigungswirkung des Filters bewirkt, und wobei eine Ausstossmündung (33) bereitgestellt ist, um die mit Fremdkörpern beladene Luft aus der geschichteten, rotierenden Strömung im System auszustossen und
- entnehmbares Verbinden des Lüftergehäuses an der ersten Stelle und des Filtergehäuses an der zweiten Stelle mit jeweiligen Enden einer zwischengeordneten Röhrenanordnung (38), welche einen Abschnitt des Strömungspfades zwischen dem Lüftergehäuse und dem Filtergehäuse ausbildet.

16. Verfahren nach Anspruch 15, umfassend ein Bereitstellen einer Verdichtungsanordnung (39, 40) im Filtergehäuse stromaufwärts des Luftfilters zum Verdichten des Volumens der rotierenden Strömung der mit Fremdkörpern beladenen Luft, um die Luftgeschwindigkeit und die Zentrifugalkraft, welche auf die durch die Luft beförderten Teilchen wirkt, zu vergrössern.

## Revendications

1. Système modulaire de nettoyage de l'air (35) requérant un dispositif d'alimentation en air propre, comprenant :
un chemin d'écoulement (22) s'étendant à travers le système depuis une admission (4) jusqu'à un refoulement (5) ;
un boîtier de ventilateur (2) monté séparément en un premier emplacement du dispositif et contenant un ventilateur entraîné par moteur (24) situé le long et faisant partie du chemin d'écoulement, pour aspirer de l'air chargé en débris particulaires au niveau de l'admission et le faire tourner autour d'un axe (A-A) pour créer un écoulement tournant qui stratifie l'air chargé en débris avec les particules les plus lourdes dans les orbites les plus externes de l'écoulement tournant ;
un orifice éjecteur (33) destiné à éjecter de l'air chargé en débris particulaires depuis l'écoulement tournant stratifié dans le système ;
un boîtier de filtre (3) contenant une chambre de séparateur-éjecteur (18) montée séparément en un second emplacement du dispositif éloigné du premier emplacement et contenant un filtre à air (9) situé le long et faisant partie du chemin d'écoulement, le filtre à air étant situé au sein de la chambre de séparateur-éjecteur et au sein de l'écoulement tournant et à travers le chemin d'écoulement en amont du refoulement afin de filtrer l'air provenant des orbites les plus internes de l'écoulement tournant stratifié, le filtre à air s'étendant dans la direction dudit axe de sorte que l'écoulement tournant autour du filtre provoque une action autonettoyante sur le filtre ;
un ensemble tubulaire intermédiaire (38) faisant partie du chemin d'écoulement, entre et monté séparément au niveau des premier et second emplacements éloignés des extrémités respectives de l'ensemble tubulaire vers le boîtier de ventilateur et le boîtier de filtre.

2. Système de nettoyage de l'air selon la revendication 1, comprenant en outre un ensemble de compression (39, 40) s'étendant sur le chemin d'écoulement entre l'ensemble tubulaire intermédiaire et le filtre à air pour comprimer le volume du flux tournant d'air chargé en débris pour augmenter la vitesse de l'air et la force centrifuge agissant sur les particules en suspension dans l'air.

3. Système de nettoyage de l'air selon la revendication 2, dans lequel l'ensemble de compression sert de support pour une extrémité amont du filtre à air dans le chemin d'écoulement du système.

4. Système de nettoyage de l'air selon la revendication 2, dans lequel l'ensemble de compression inclut une pluralité d'aubes stationnaires (40) dans le chemin d'écoulement.

5. Système de nettoyage de l'air selon la revendication 1, dans lequel le boîtier de ventilateur est relié de façon détachable à une extrémité amont de l'ensemble tubulaire.

6. Système de nettoyage de l'air selon la revendication 1, dans lequel le boîtier de filtre est relié de façon détachable à une extrémité aval de l'ensemble tubulaire.

7. Système de nettoyage de l'air selon la revendication 1, dans lequel le boîtier de ventilateur et le boîtier de filtre sont tous deux reliés de façon détachable à l'ensemble tubulaire.

8. Système de nettoyage de l'air selon la revendication 1, comprenant en outre un ensemble de compression (39, 40) situé dans le boîtier de filtre en amont du filtre à air.

9. Système de nettoyage de l'air selon la revendication 1, comprenant en outre un ensemble de compression (11) situé dans le boîtier de ventilateur pour comprimer le volume de l'écoulement tournant d'air chargé en débris pour augmenter la vitesse de l'air et la force centrifuge agissant sur les particules en suspension dans l'air.

10. Système de nettoyage de l'air selon la revendication 9, dans lequel l'ensemble de compression sert de support pour le ventilateur entraîné par moteur.

11. Système de nettoyage de l'air selon la revendication 9, dans lequel l'ensemble de compression inclut une pluralité d'aubes stationnaires (12) dans le chemin d'écoulement.

12. Système de nettoyage de l'air selon la revendication 1, comprenant en outre une chambre de séparateur-éjecteur (18) dans le boîtier de filtre, les orbites les plus externes de l'écoulement tournant cheminant sur une paroi externe de la chambre de séparateur-éjecteur vers l'orifice éjecteur.

13. Système de nettoyage de l'air selon la revendication 12, dans lequel le filtre est situé au centre de la chambre de séparateur.

14. Système de nettoyage de l'air selon la revendication 1, dans lequel une surface périphérique externe du filtre allongé est cylindrique.

15. Procédé de fabrication d'un système de nettoyage de l'air (35) requérant un dispositif d'alimentation en air propre comprenant :
la formation d'un système modulaire de nettoyage de l'air (35) sous la forme d'une pluralité de composants (2, 3, 38), chacun monté séparément sur le dispositif et définissant une portion respective d'un chemin d'écoulement (22) à travers le système depuis une admission (4) jusqu'à un refoulement (5), la formation incluant
le montage séparé en un premier emplacement du dispositif d'un boîtier de ventilateur (2) contenant un ventilateur entraîné par un moteur (24) situé le long et faisant partie du chemin d'écoulement, pour aspirer de l'air chargé en débris particulaires dans l'admission et le faire tourner autour d'un axe (A-A) pour former un écoulement tournant qui stratifie l'air chargé en débris avec les particules les plus lourdes dans les orbites les plus externes de l'écoulement tournant,
le montage séparé en un second emplacement du dispositif, éloigné du premier emplacement, d'un boîtier de filtre (3) contenant une chambre de séparateur-éjecteur (18) et faisant partie du chemin d'écoulement en aval du ventilateur entraîné par moteur, un filtre à air (9) étant situé au sein de la chambre de séparateur-éjecteur à travers le chemin d'écoulement en amont du refoulement pour filtrer l'air provenant des orbites les plus internes de l'écoulement tournant stratifié, le filtre à air s'étendant dans la direction dudit axe de sorte que l'écoulement tournant autour du filtre provoque une action autonettoyante sur le filtre, et un orifice éjecteur (33) étant prévu pour éjecter de l'air chargé en débris particulaires depuis l'écoulement tournant stratifié dans le système, et
le raccordement détectable du boîtier de ventilateur au niveau du premier emplacement, et du boîtier de filtre au niveau du second emplacement à des extrémités respectives d'un ensemble tubulaire intermédiaire (38) faisant partie du chemin d'écoulement entre le boîtier de ventilateur et le boîtier de filtre.

16. Procédé selon la revendication 15, incluant la fourniture d'un ensemble de compression (39, 40) dans le boîtier de filtre en amont du filtre à air pour comprimer le volume de l'écoulement tournant d'air chargé en débris pour augmenter la vitesse de l'air et la force centrifuge agissant sur les particules en suspension dans l'air.
